# EUROPÄISCHE PATENTSCHRIFT

(11) **EP 2 672 296 B1**
(45) Veröffentlichungstag und Bekanntmachung des Hinweises auf die Patenterteilung: **15.04.2020**
(21) Anmeldenummer: 13159411.1
(22) Anmeldetag: 15.03.2013
(51) Int. Cl.: G01V 8/20

(54) **Lichtvorhang**
Light curtain
Rideau lumineux

(30) Priorität: 03.05.2012 DE 102012103864
(43) Veröffentlichungstag der Anmeldung: 11.12.2013
(73) Patentinhaber: Leuze electronic GmbH + Co KG, 73277 Owen/Teck (DE)
(72) Erfinder: Schedlberger, Robert, 4283 Bad Zell (AT); Schönleitner, Arnold, 3002 Purkersdorf (AT)
(74) Vertreter: Ruckh, Rainer Gerhard

(56) Entgegenhaltungen:
- WO-A1-87/04259
- DE-B3-102009 056 848
- US-A- 3 805 061
- US-A1- 2003 029 992
- US-A1- 2010 127 158

## Beschreibung

Die Erfindung betrifft einen Lichtvorhang gemäß dem Oberbegriff des Anspruchs 1.

Derartige Lichtvorhänge dienen allgemein zur Erfassung von Objekten in einem Überwachungsbereich und umfassen eine Sendereinheit mit einer Anordnung von Lichtstrahlen emittierenden Sendern und eine Empfängereinheit mit einer Anordnung von Lichtstrahlen empfangenden Empfängern. Die Sender- und Empfängereinheit sind an gegenüberliegenden Rändern des Überwachungsbereichs so angeordnet, dass bei freiem Überwachungsbereich die Lichtstrahlen eines Senders auf einen zugeordneten gegenüberliegenden Empfänger treffen. Dieses Sender-/Empfängerpaar bildet eine Strahlachse des Lichtvorhangs. Die einzelnen Strahlachsen des Lichtvorhangs werden zyklisch einzeln nacheinander aktiviert. Hierzu ist in der Sendereinheit eine Steuereinheit integriert, die ein Schieberegister so ansteuert, dass damit die Sender zyklisch einzeln nacheinander aktiviert werden. In der Empfängereinheit ist eine Auswerteeinheit integriert, die ein weiteres Schieberegister so ansteuert, dass damit die Empfänger einzeln nacheinander aktiviert werden. Die Aktivierung der Sender und Empfänger wird auf optischem Wege oder elektrisch synchronisiert. Durch diese Synchronisation werden die einzelnen Sender-/Empfängerpaare des Lichtvorhangs zyklisch einzeln nacheinander aktiviert.

Zur Generierung eines Objektfeststellungssignals in Form eines binären Schaltsignals erfolgt in der Auswerteeinheit mittels eines oder mehrerer Schwellwerte eine Amplitudenbewertung der Empfangssignale. Innerhalb eines Zyklus, bei welchem alle Sender-/Empfängerpaare nacheinander aktiviert werden, wird geprüft, ob wenigstens die Lichtstrahlen einer Strahlachse unterbrochen sind. Ist dies der Fall, wird von der Auswerteeinheit als Schaltsignalzustand eine Objektmeldung ausgegeben. Ist keine der Strahlachsen unterbrochen, wird als Schaltsignalzustand ein freier Überwachungsbereich gemeldet.

Nachteilig bei derartigen Lichtvorhängen ist die relativ kleine Wiederholrate, mit der das Schaltsignal generiert wird, da für jede neue Generierung des Schaltsignals ein kompletter, fest vorgegebener Durchlauf aller Strahlachsen des Lichtvorhangs vorgenommen werden muss. Die Einzelaktivierung aller Sender-/Empfängerpaare innerhalb eines Zyklus kann prinzipiell zwar durch eine Ausblendung vorgegebener Strahlachsen geändert werden, das heißt diese Strahlachsen werden nicht zur Auswertung und Generierung des Objektfeststellungssignals herangezogen. Diese Variation führt jedoch zu keiner Erhöhung der Wiederholrate der Generierung des Schaltsignals.

Die US 3 805 061 A betrifft einen Lichtvorhang mit einer eine Anzahl von Lichtstrahlen emittierenden Sendern aufweisenden Sendereinheit und einer und eine Anzahl von Lichtstrahlen empfangenden Empfängern aufweisenden Empfängereinheit. Die Sendereinheit ist in eine Anzahl von Baugruppen unterteilt. Die Empfängereinheit ist in eine entsprechende Anzahl von Baugruppen unterteilt. Die einzelnen Sender einer Baugruppe werden über Verzögerungsglieder einzeln nacheinander aktiviert. Dabei sind aneinander in ihrer Anordnung in einer Baugruppe entsprechende Sender aller Baugruppe schaltungstechnisch zusammengefasst, so dass diese gemeinsam aktiviert werden.

Die US 2003/0029992 A1 betrifft einen Lichtvorhang mit einer Sendereinheit, die eine Anzahl von Lichtstrahlen emittierenden Sendern aufweist, die einzeln nacheinander aktiviert werden. Weiterhin umfasst der Lichtvorhang eine Empfängereinheit mit einer Anzahl von Lichtstrahlen empfangenden Empfängern. Mit diesem Lichtvorhang wird ein flächiger Überwachungsbereich überwacht. Um Zonen des Überwachungsbereichs ausblenden zu können, werden in diesen Subsensoreinheiten eingebracht. Eine erste Subsensoreinheit empfängt Lichtstrahlen von Sendern der Sendereinheit. Eine zweite Subsensoreinheit sendet während des Sendebetriebs der Sendereinheit Lichtstrahlen zu den Empfängern der Empfängereinheit die von den Subsensoreinheiten so abgeschattet werden, dass sie kein Licht mehr von den Sendern der Sendereinheit empfangen können.

Die US 2010/0127158 A1 betrifft einen optoelektronischen Sensor zum Absichern eines Gefahrenbereichs, der einen ersten und einen zweiten Sensorteil aufweist. Die beiden Sensorteile sind mit einem räumlichen Abstand zueinander angeordnet. Jeder Sensorteil besitzt eine Vielzahl von Sendeelementen zum Erzeugen von Sendestrahlen und eine Vielzahl von Empfangselementen zum Empfangen der Sendestrahlen. Auf diese Weise wird eine Vielzahl von gegenläufigen Sendestrahlen zwischen den Sensorteilen gebildet. Jeder Sensorteil weist zumindest einen Auswerteschaltkreis auf, der mit den Empfangselementen des jeweiligen Sensorteils gekoppelt ist. Jeder Auswerteschaltkreis ist dazu ausgebildet, ein Abschaltsignal in Abhängigkeit von den jeweils angekoppelten Empfangselementen zu erzeugen.

Der Erfindung liegt die Aufgabe zugrunde, einen Lichtvorhang bereitzustellen, welcher bei geringem konstruktivem Aufwand eine erhöhte Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Lichtvorhang dient zur Erfassung von Objekten in einem Überwachungsbereich und umfasst eine Sendereinheit mit eine Anzahl von Lichtstahlen emittierenden Sendern und eine Empfängereinheit mit eine Anzahl von Lichtstrahlen empfangenden Empfängern. Die Sendereinheit und die Empfängereinheit sind an gegenüberliegenden Rändern des Überwachungsbereichs angeordnet. Jedem Sender ist wenigstens ein Empfänger so zugeordnet, dass bei freiem Überwachungsbereich die Lichtstrahlen dieses Senders auf den zugeordneten Empfänger treffen. Die Sender und diesen zugeordnete Empfänger werden zyklisch jeweils während eines Messzyklus aktiviert. Mit einer Auswerteeinheit, wird in Abhängigkeit von Empfangssignalen von Empfängern ein Objektfeststellungssignal am Ende eines Messzyklus generiert. Die Sender der Sendereinheit und die Empfänger der Empfängereinheit sind jeweils zu einzelnen Kaskaden zusammengefasst, wobei Sender oder Empfänger einer Kaskade innerhalb eines Kaskadenzyklus einzeln nacheinander aktiviert werden. Dabei fallen die Kaskadenzyklen einzelner Kaskaden von Sendern oder Empfängern innerhalb eines Messzyklus zumindest teilweise zeitlich zusammen. Während jedes Messzyklus werden die Sender oder die Empfänger aller Kaskaden je einmal aktiviert werden, wobei die unterschiedlichen Kaskadenzyklen zeitlich überlappen, und zeitlich versetzt aktiviert werden. Ein wesentlicher Vorteil des erfindungsgemäßen Lichtvorhangs besteht darin, dass durch die zeitliche Überlagerung, das heißt Verschachtelung einzelner Kaskadenzyklen, der Messzyklus für die Objektüberwachung erheblich reduziert werden kann gegenüber einer rein seriellen Einzelaktivierung aller Sender-/Empfängerpaare eines Lichtvorhangs.

Da das Objektfeststellungssignal jeweils am Ende eines Messzyklus generiert wird, wird somit die Wiederholrate, mit der das Objektfeststellungssignal generiert wird, erheblich erhöht, das heißt es wird eine schnellere und damit auch zuverlässigere Objektdetektion ermöglicht.

Durch die erfindungsgemäße Parallelisierung beziehungsweise Verschachtelung können andererseits die Zeitintervalle für die Einzelaktivierung von Sendern und Empfängern erhöht werden, ohne dass sich hierbei die Dauer des Messzyklus erhöht. Damit aber können die Auswertezeiten für die Empfängersignale der einzelnen Empfänger erhöht werden, so dass ohne eine Beeinträchtigung der Wiederholrate zur Generierung des Objektfeststellungssignals eine genauere Signalauswertung und damit eine erhöhte Nachweissicherheit erzielt wird.

Gemäß einer besonders vorteilhaften Ausführungsform der Erfindung sind jeder Kaskade Steuermittel zugeordnet, mittels derer einzelne Sender oder Empfänger aktiviert werden. Dabei sind die Steuermittel von einer übergeordneten Logikeinheit gesteuert.

Die den einzelnen Kaskaden zugeordneten Steuermittel sind eine wesentliche Voraussetzung dafür, dass die Kaskadenzyklen dieser Kaskaden ineinander verschachtelt werden können und somit zumindest teilweise parallel ablaufen können. Dies beruht darauf, dass mit den Steuermitteln die Sender beziehungsweise Empfänger der einzelnen Kaskaden unabhängig voneinander aktiviert werden können, was bei einer zentralen Ansteuerung aller Sender beziehungsweise Empfänger, beispielsweise über ein Schieberegister, nicht möglich wäre.

Jedes Steuermittel aktiviert nach einer bestimmten Reihenfolge die einzelnen Sender beziehungsweise Empfänger der zugeordneten Kaskade. Die übergeordnete Logikeinheit dagegen initialisiert lediglich die einzelnen Kaskadenaktivierungen, das heißt sie gibt die zeitliche Folge vor, wann für die einzelnen Kaskaden deren Sender- beziehungsweise Empfängeraktivierung relativ zu den Aktivierungen der anderen Kaskaden erfolgen soll.

Damit wird eine effizient arbeitende, verteilte Steuerlogik erhalten, die gleichzeitig einen einfachen Aufbau aufweist.

Die einzelnen Steuermittel können dabei, wie auch die Logikeinheit, von Rechnereinheiten wie Microcontrollern gebildet sein. Generell können die Einheiten auch in Form diskreter Hardwareschaltungen ausgebildet sein.

Besonders vorteilhaft umfasst die Ansteuerung einzelner Sender und Empfänger zu deren Aktivierung unterschiedliche Teilprozesse. Einzelne Teilprozesse laufen in unterschiedlichen Kaskaden zeitlich parallel ab.

Beispielsweise sind bei einer Aktivierung eines Empfängers drei verschiedene Teilprozesse vorgesehen. In einem ersten Teilprozess erfolgt über das Steuermittel der jeweiligen Kaskade eine Adressierung eines Empfängers, das heißt eine Auswahl des Empfängers, über elektrische Schaltvorgänge. Dadurch entstehen Störungen auf der Signalleitung die zum Empfänger führt. Durch diese Störungen können Verfälschungen der Empfangssignale des Empfängers auftreten. Daher besteht ein zweiter Teilprozess in einer Wartephase, bis diese Störungen abgeklungen sind. In einem anschließenden dritten Teilprozess erfolgt dann die Auswertung des durch einen Sendelichtimpuls des zugeordneten Senders erzeugten Empfangssignals.

In diesem Fall sind bevorzugt die zeitlichen Verschachtelungen der Kaskadenzyklen der einzelnen Kaskaden so ausgebildet, dass sich immer nur unterschiedliche Teilprozesse zeitlich überlappen, so dass gewährleistet ist, dass nie zwei Sender gleichzeitig aktiviert sind, wodurch gegenseitige optische Beeinflussungen verschiedener Sender ausgeschlossen sind. Dennoch kann durch die genannten Verschachtelungen der Messzyklus des Lichtvorhangs erheblich reduziert werden.

Gemäß einer besonders zweckmäßigen Ausführungsform der Erfindung bilden jeweils ein Sender und ein zugeordneter Empfänger ein Sender-/Empfängerpaar, wobei die Sender und Empfänger eines Sender-/Empfängerpaares synchron aktiviert sind.

Dabei kann die Synchronisierung der Sender und Empfänger sowohl auf optischem Wege als auch elektrisch über geeignete Kabelverbindungen zwischen der Sendereinheit und der Empfängereinheit erfolgen.

Weiterhin wird für jede Kaskade ein regelmäßiges, vorzugsweise für alle Kaskaden gleiches Aktivierungs-Zeitraster der Kaskaden vorgesehen, wodurch die zeitliche Verschachtelung der Kaskadenzyklen erheblich erleichtet wird.

Gemäß einer ersten Variante der Erfindung werden die Empfangssignale der Empfänger aller Kaskaden über eine Signalleitung der Auswerteeinheit zugeführt und dort zentral ausgewertet.

Die zentrale Auswertung der Empfangssignale der Empfänger zur Generierung von Objektfeststellungssignalen in einer Auswerteeinheit stellt eine konstruktiv einfache Möglichkeit der Signalauswertung dar.

Gemäß einer zweiten Variante der Erfindung ist die Auswerteeinheit von mehreren, separaten Auswertemodulen gebildet, wobei jeweils ein Auswertemodul einer Kaskade mit Empfängern zugeordnet ist.

In diesem Fall können die Signalauswertungen in den Auswertemodulen zumindest teilweise zeitlich parallel erfolgen.

Dadurch kann eine schnelle Generierung von Objektfeststellungssignalen erzielt werden.

Die Erfindung wird im Folgenden anhand der Zeichnungen erläutert. Es zeigen:
- Figur 1:: Prinzipaufbau des erfindungsgemäßen Lichtvorhangs.
- Figur 2:: Aufbau der Empfängereinheit des Lichtvorhangs gemäß Figur 1.
- Figur 3:: Ablaufdiagramm für die Aktivierung von Empfängern einzelner Kaskaden in der Empfängereinheit gemäß Figur 2.
- Figur 4:: Zeitdiagramm für den Ablauf gemäß Figur 3.

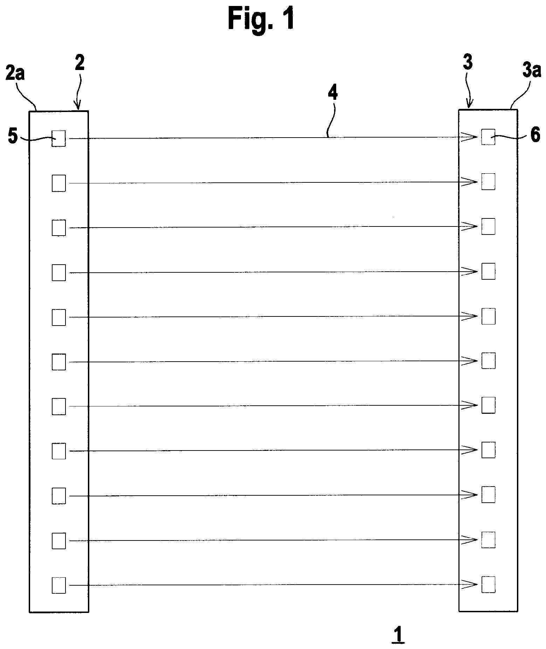

Figur 1 zeigt den Prinzipaufbau des erfindungsgemäßen Lichtvorhangs 1. Der Lichtvorhang 1 umfasst eine Sendereinheit 2 mit einem ersten Gehäuse 2a und eine Empfängereinheit 3 mit einem zweiten Gehäuse 3a. Die Sendereinheit 2 und Empfängereinheit 3 sind an gegenüberliegenden Rändern eines Überwachungsbereichs angeordnet, innerhalb dessen mit dem Lichtvorhang 1 Objekte erfasst werden können.

Im dem Gehäuse 2a der Sendereinheit 2 befindet sich eine Linearanordnung von Lichtstrahlen 4 emittierenden Sendern 5. In dem Gehäuse 3a der Empfängereinheit 3 befindet sich eine der Zahl der Sender 5 entsprechende Anzahl von Lichtstrahlen 4 empfangenden Empfängern 6, die ebenfalls eine Linearanordnung bilden. Die Sender 5 sind von Leuchtdioden, Laserdioden oder dergleichen gebildet und emittieren Lichtstrahlen 4 in Form von Sendelichtimpulsen. Die Empfänger 6 sind von Leuchtdioden oder Laserdioden gebildet. Zur Strahlformung der Lichtstrahlen 4 können den Sendern 5 nicht dargestellte Sendeoptiken nachgeordnet sein. Zur Fokussierung der Lichtstrahlen 4 auf die Empfänger 6 können diese nicht dargestellte Empfangsoptiken vorgeordnet sein.

Jedem Sender 5 ist, wie aus Figur 1 ersichtlich, ein gegenüberliegend angeordneter Empfänger 6 so zugeordnet, dass bei freiem Überwachungsbereich die Lichtstrahlen 4 dieses Senders 5 auf den zugeordneten Empfänger 6 treffen. Damit bilden diese Sender 5 und Empfänger 6 ein Sender-/Empfängerpaar und eine sogenannte Strahlachse des Lichtvorhangs 1 aus. Die Erfassung von Objekten im Überwachungsbereich erfolgt durch Registrieren von durch Objekteingriffen unterbrochenen Strahlachsen.

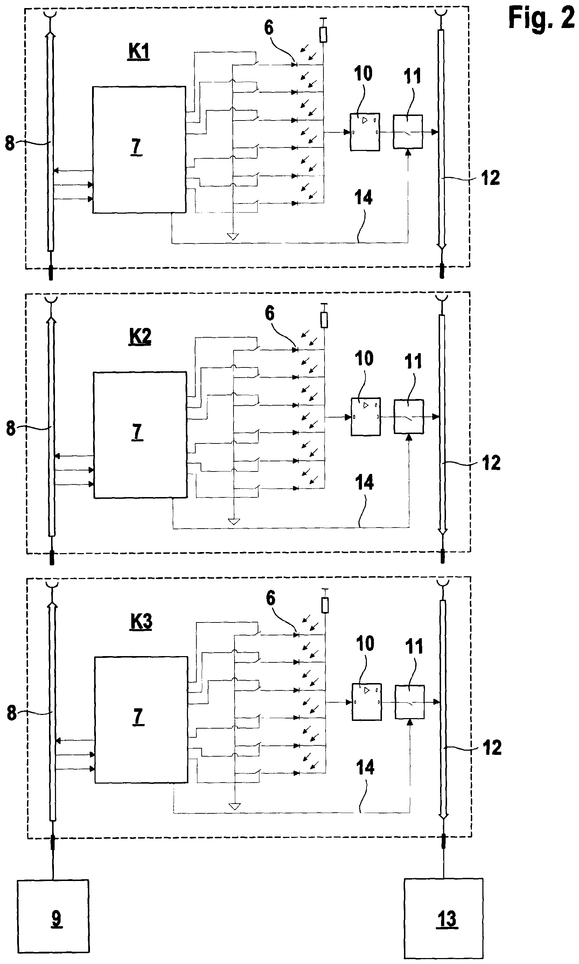

Figur 2 zeigt den detaillierten Aufbau der Empfängereinheit 3. Die Empfänger 6 der Empfängereinheit 3 sind in drei Kaskaden K1, K2, K3 zusammengefasst, wobei die Empfänger 6 einer Kaskade K1, K2, K3 beispielsweise auf einer gemeinsamen Leiterplatte oder einer sonstigen Hardwareeinheit zusammengefasst werden. Im vorliegenden Fall umfasst jede Kaskade K1, K2, K3 sechs Empfänger 6, wobei die Kaskaden K1, K2, K3 identisch aufgebaut sind.

Jeder Kaskade K1, K2, K3 ist ein Steuermittel zugeordnet, mittels dessen die Empfänger 6 der Kaskade K1, K2, K3 angesteuert, insbesondere aktiviert werden können. Das Steuermittel für eine Kaskade K1, K2, K3 besteht im vorliegenden Fall aus einem Microcontroller 7, an dessen Ausgängen die Empfänger 6 angeschlossen sind. Allgemein bildet das Steuermittel eine programmierbare Logik, wobei dieses prinzipiell auch als diskrete Schaltungsanordnung ausgeführt sein kann.

Die einzelnen Steuermittel sind über eine Steuerleitung 8 an eine übergeordnete Logikeinheit 9 angeschlossen, die ebenfalls von einem Microcontroller 7 gebildet sein kann.

Die Empfänger 6 jeder Kaskade K1, K2, K3 sind über einen Verstärker 10 und einen Multiplexer 11 und über eine Signalleitung 12 an eine zentrale Auswerteeinheit 13 angeschlossen, die ebenfalls von einem Microcontroller 7 gebildet sein kann.

Von jedem Steuermittel einer Kaskade K1, K2, K3 führt eine Steuerleitung 14 zu dem Multiplexer 11 dieser Kaskade K1, K2, K3. Durch in dem Steuermittel generierte Steuersignale für diesen Multiplexer 11 erfolgt selektiv eine Aktivierung der jeweiligen Kaskade K1, K2, K3. Die Initialisierung des zeitlichen Ablaufs für die Aktivierung einzelner Kaskaden K1, K2, K3 erfolgt über die übergeordnete Logikeinheit 9.

Eine entsprechende Kaskadenanordnung ist auch für die Sender 5 der Sendereinheit 2 vorgesehen, wobei vorzugsweise auch die Steuermittel für die Sender-Kaskaden an die übergeordnete Logikeinheit 9 angeschlossen sind.

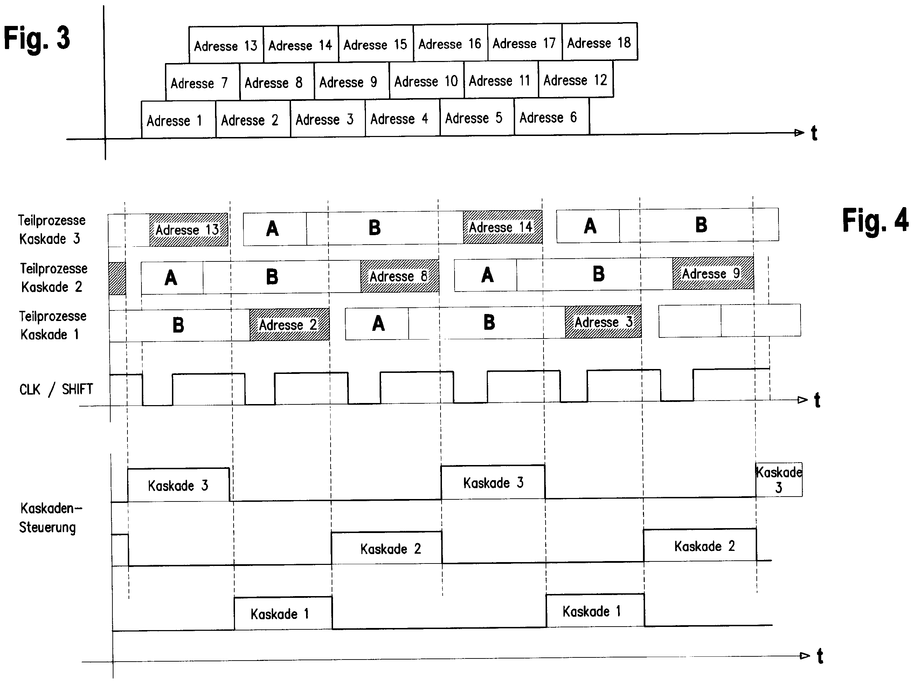

Der zeitliche Ablauf der Aktivierung der einzelnen Kaskaden K1, K2, K3 ist in Figur 3 dargestellt. Dabei zeigt Figur 3 den zeitlichen Ablauf eines Messzyklus, an dessen Ende ein Objektfeststellungsignal generiert wird. Während des Betriebs des Lichtvorhangs 1 wird dieser Messzyklus laufend wiederholt. Die einzelnen Empfänger 6 der Kaskaden K1, K2, K3 gemäß Figur 2 und entsprechend den zugeordneten Sendern der Kaskaden K1, K2, K3 der Steuereinheit werden über Adressen adressiert und aktiviert. In Figur 3 sind die Adressen 1 bis 6 den Empfängern 6 der ersten Kaskade K1, die Adressen 7 bis 12 den Empfängern 6 der zweiten Kaskade K2 und die Adressen 13 bis 18 den Empfängern 6 der dritten Kaskade K3 zugeordnet.

Wie aus dem Schema von Figur 3 hervorgeht, werden die Empfänger 6 einer Kaskade K1, K2, K3 (wie auch die Sender der zugeordneten Kaskade) einzeln nacheinander aktiviert. Diese Aktivierung der Empfänger 6 einer Kaskade K1, K2, K3 erfolgt über das Steuermittel dieser Kaskade K1, K2, K3 zweckmäßigerweise über ein Synchronisationssignal, welches ein Schieben von einer Empfänger-Adresse zur nächsten auslöst. Dieses Weiterschalten von Adressen kann in einem einzigen Schaltvorgang erfolgen oder auch in einer Sequenz von zwei Schaltvorgängen, wobei mit einem ersten Schaltvorgang ein Empfänger 6 deaktiviert wird und dann in einem zweiten Schaltvorgang der nächste Empfänger 6 aktiviert wird.

Die Zeitintervalle in denen die Empfänger 6 der einzelnen Kaskaden K1, K2, K3 aktiviert sind, werden von der Logikeinheit 9 so vorgegeben, dass sich diese, wie Figur 3 zeigt, teilweise zeitlich überschneiden.

Figur 4 zeigt einen Zeitausschnitt des Ablaufs eines Messzyklus aus Figur 3, wobei in Figur 4 der Ablauf unterschiedlicher Teilprozesse bei der Aktivierung unterschiedlicher Empfänger 6 der einzelnen Kaskaden K1, K2, K3 detailliert dargestellt ist.

Die unteren Zeitdiagramme zeigen die Kaskadensteuerung die über die Logikeinheit 9 vorgenommen wird. Über die Logikeinheit 9 erfolgt eine Initialisierung des Ablaufs der Kaskadenaktivierung. Diese wird über die von den Steuermitteln auf die Steuerleitungen 8, 14 zu den Multiplexern 11 ausgegebenen Steuersignalen realisiert. Über diese Steuersignale erfolgt eine zeitlich versetzte Aktivierung der einzelnen Kaskaden K1, K2, K3, wie die unteren Diagramme von Figur 4 zeigen.

In jedem Zeitintervall der Kaskade 1, 2, 3 in Figur 4 liegt, wie in den darüber liegenden Zeitdiagrammen dargestellt, das Zeitintervall (in Figur 4 mit Adressen bezeichnet), innerhalb dessen ein Empfänger 6 einen vom zugeordneten Sender emittierten Sendelichtimpuls empfängt.

Dieses Empfangen von Sendelichtimpulsen bildet einen Teilprozess C innerhalb des gesamten Prozesses der Aktivierung eines Empfängers 6.

Das Empfangen eines Sendelichtimpulses stellt also nur einen Teilprozess C eines gerade aktivierten Empfängers 6 dar. Vor diesem Teilprozess C findet zunächst die Adressierung, das heißt Auswahl des jeweiligen Empfängers 6 statt. Dieser Teilprozess ist in Figur 4 mit A bezeichnet. Der Umschaltvorgang erfolgt mittels des Synchronisationssignals, in Figur 4 mit CLK/SHIFT bezeichnet.

Durch den Umschaltvorgang, der ein Schalten zwischen unterschiedlichen elektrischen Pegeln umfasst, kommt es zwangsläufig zu elektrischen Störungen auf der zum jeweiligen Empfänger 6 führenden Leitung. Diese Störungen würden zu Signalverfälschungen bei Empfang eines Sendelichtimpulses am Empfänger 6 führen. Aufgrund dessen ist als weiterer Teilprozess B eine Wartephase zwischen dem Teilprozess A (Auswahl eines Empfängers) und dem Teilprozess C vorgesehen. Die Dauer des Teilprozesses B ist so gewählt, dass Störungen auf der Leitung zum Empfänger 6 abklingen bevor der Teilprozess C beginnt.

Über die Logikeinheit 9 sind die Aktivierungen von Empfängern 6 unterschiedlicher Kaskaden K1. K2, K3 so geschachtelt, dass bestimmte Teilprozesse bei der Aktivierung der Empfänger 6 unterschiedlicher Kaskaden K1, K2, K3 zeitlich parallel ablaufen.

Die zeitliche Staffelung für die Kaskaden K1, K2, K3 der Sender 5 der Sendereinheit 2 ist entsprechend ausgeführt, so dass ein Sender 5 gerade dann einen Sendelichtimpuls emittiert, während für den zugeordneten Empfänger 6 gerade der Teilprozess C für das Empfangen des Sendelichtimpulses läuft.

Beispielsweise erfolgt in den mit Adresse 2 und Adresse 3 gekennzeichneten Zeitintervallen mit dem zweiten beziehungsweise dritten Empfänger 6 der Kaskade 1 gerade ein Empfangen eines Sendelichtimpulses des zugeordneten Senders 5. Parallel hierzu läuft für den zweiten und dritten Empfänger 6 der Kaskade 2 (Adressen 8, 9) gerade der Teilprozess B, das heißt die Wartephase im Anschluss auf den Teilprozess A. Ebenfalls parallel hierzu verlaufen die Teilprozesse A für den zweiten und dritten Empfänger 6 der Kaskade 3 (Adressen 13, 14).

Durch diese Parallelisierung von Teilprozessen wird gegenüber einer rein seriellen Aktivierung aller Empfänger 6, bei der alle Teilprozesse A, B, C aller Empfänger 6 zeitlich nacheinander erfolgen, eine erhebliche Verkürzung des Messzykluses erreicht. Dennoch wird trotz der Parallelisierung erreicht, dass die Teilprozesse C aller Empfänger 6 und damit die Zeitintervalle des Aussendens von Sendelichtimpulsen durch die Sender 5 immer zeitlich versetzt, also nie parallel erfolgen, wodurch eine gegenseitige optische Beeinflussung von Strahlachsen des Lichtvorhangs 1 ausgeschlossen ist.

Während des Betriebs des Lichtvorhangs 1 wird der in Figur 4 dargestellte Messzyklus fortlaufend wiederholt. Während jedes Messzyklus werden die Empfänger 6 aller Kaskaden K1, K2, K3 je einmal aktiviert. Durch die Synchronisierung des Lichtvorhangs 1 werden der Sender 5 und der Empfänger 6 jeder Strahlachse synchron aktiviert. Eine Objekterkennung erfolgt durch Registrieren des Unterbrechens einer oder mehreren Strahlachsen des Lichtvorhangs 1.

Die Auswertung hierzu erfolgt in der Auswerteeinheit 13. Hierzu werden die Empfangssignale der einzelnen Empfänger 6 zeitlich nacheinander auf die Signalleitung 12 ausgegeben und so der Auswerteeinheit 13 zugeführt. In der Auswerteeinheit 13 erfolgt eine Objekterfassung durch eine Schwellwertbewertung der Empfangssignale. Als Ergebnis wird von der Auswerteeinheit 13 am Ende jedes Messzyklus ein Objektfeststellungsignal generiert, das im vorliegenden Fall als Schaltsignal ausgebildet ist, dessen Schaltzustände angeben, ob sich ein Objekt im Überwachungsbereich befindet oder nicht. Alternativ kann auch eine Objektvermessung, beispielsweise eine Größen- oder Konturbestimmung, mit dem Lichtvorhang 1 erfolgen.

### Bezugszeichenliste

- (K1): Kaskade
- (K2): Kaskade
- (K3): Kaskade
- (1): Lichtvorhang
- (2): Sendereinheit
- (2a): Gehäuse
- (3): Empfängereinheit
- (3a): Gehäuse
- (4): Lichtstrahlen
- (5): Sender
- (6): Empfänger
- (7): Microcontroller
- (8): Steuerleitung
- (9): Logikeinheit
- (10): Verstärker
- (11): Multiplexer
- (12): Signalleitung
- (13): Auswerteeinheit
- (14): Steuerleitung

## Patentansprüche

1. Lichtvorhang (1) zur Erfassung von Objekten in einem Überwachungsbereich mit einer Sendereinheit (2) umfassend eine Anzahl von Lichtstahlen emittierenden Sendern (5), mit einer Empfängereinheit (3) umfassend eine Anzahl von Lichtstrahlen (4) empfangenden Empfängern (6), wobei die Sendereinheit (2) und die Empfängereinheit (3) an gegenüberliegenden Rändern des Überwachungsbereichs angeordnet sind, und wobei jedem Sender (5) wenigstens ein Empfänger (6) so zugeordnet ist, dass bei freiem Überwachungsbereich die Lichtstrahlen (4) dieses Senders (5) auf den zugeordneten Empfänger (6) treffen, wobei Sender (5) und diesen zugeordnete Empfänger (6) zyklisch jeweils während eines Messzyklus aktiviert werden, und mit einer Auswerteeinheit (13), in welcher in Abhängigkeit von Empfangssignalen von Empfängern (6) ein Objektfeststellungssignal am Ende eines Messzyklus generiert wird, wobei die Sender (5) der Sendereinheit (2) und die Empfänger (6) der Empfängereinheit (3) jeweils zu einzelnen Kaskaden (K1, K2, K3) zusammengefasst sind, wobei die Sender (5) oder Empfänger (6) einer Kaskade (K1, K2, K3) innerhalb eines Kaskadenzyklus einzeln nacheinander aktiviert werden, und wobei die Kaskadenzyklen einzelner Kaskaden (K1, K2, K3) von Sendern (5) oder Empfängern (6) innerhalb eines Messzyklus zumindest teilweise zeitlich zusammenfallen, **dadurch gekennzeichnet, dass** während jedes Messzyklus die Sender oder die Empfänger aller Kaskaden je einmal aktiviert werden, wobei die unterschiedlichen Kaskadenzyklen zeitlich überlappen, und zeitlich versetzt aktiviert werden.

2. Lichtvorhang nach Anspruch 1, **dadurch gekennzeichnet, dass** jeder Kaskade (K1, K2, K3) Steuermittel zugeordnet sind, mittels derer einzelne Sender (5) oder Empfänger (6) aktiviert werden.

3. Lichtvorhang nach Anspruch 2, **dadurch gekennzeichnet, dass** die Steuermittel von einer übergeordneten Logikeinheit (9) gesteuert sind.

4. Lichtvorhang nach einem der Ansprüche 1 bis 3, **dadurch gekennzeichnet, dass** die Ansteuerung einzelner Sender (5) und Empfänger (6) zu deren Aktivierung unterschiedliche Teilprozesse umfasst, und dass einzelne Teilprozesse in unterschiedlichen Kaskaden (K1, K2, K3) zeitlich parallel ablaufen.

5. Lichtvorhang nach Anspruch 4, **dadurch gekennzeichnet, dass** die Sender (5) der Sendereinheit (2) innerhalb eines Messzyklus einzeln aktiviert sind.

6. Lichtvorhang nach Anspruch 5, **dadurch gekennzeichnet, dass** jeweils ein Sender (5) und ein zugeordneter Empfänger (6) ein Sender-/Empfängerpaar bilden, wobei die Sender (5) und Empfänger (6) eines Sender-/Empfängerpaares synchron aktiviert sind.

7. Lichtvorhang nach einem der Ansprüche 1 bis 6, **dadurch gekennzeichnet, dass** die Empfangssignale der Empfänger (6) aller Kaskaden (K1, K2, K3) über eine Signalleitung (12) der Auswerteeinheit (13) zugeführt und dort zentral ausgewertet werden.

8. Lichtvorhang nach einem der Ansprüche 1 bis 6, **dadurch gekennzeichnet, dass** die Auswerteeinheit (13) von mehreren, separaten Auswertemodulen gebildet ist, wobei jeweils ein Auswertemodul einer Kaskade (K1, K2, K3) mit Empfängern (6) zugeordnet ist.

9. Lichtvorhang nach Anspruch 8, **dadurch gekennzeichnet, dass** die Signalauswertungen in den Auswertemodulen zumindest teilweise zeitlich parallel erfolgen.

## Claims

1. A light curtain (1) for detecting objects in a monitoring area with a transmitter unit (2) comprising a number of light beam emitting transmitters (5), with a receiver unit (3) comprising a number of light beam (4) receiving receivers (6), wherein the transmitter unit (2) and the receiver unit (3) are arranged at opposite edges of the monitoring area, and wherein at least one receiver (6) is associated with each transmitter (5) in such a way that when the monitoring area is free, the light beams (4) of this transmitter (5) strike the associated receiver (6), wherein the transmitter (5) and the receivers (6) associated therewith are each cyclically activated during a measuring cycle, and with an evaluation unit (13), in which an object detection signal is generated at the end of a measuring cycle as a function of received signals from receivers (6), the transmitters (5) of the transmitter unit (2) and the receivers (6) of the receiver unit (3) each being combined to form individual cascades (K1, K2, K3), the transmitters (5) or receivers (6) of a cascade (K1, K2, K3) being activated individually one after the other within a cascade cycle, and wherein the cascade cycles of individual cascades (K1, K2, K3) of transmitters (5) or receivers (6) within a measurement cycle at least partially coincide in time, **characterised in that** during each measurement cycle the transmitters or the receivers of all cascades are activated once each, wherein the different cascade cycles overlap in time and are activated with a time offset.

2. The light curtain according to claim 1, **characterised in that** control means are associated with each cascade (K1, K2, K3), by means of which individual transmitters (5) or receivers (6) are activated.

3. The light curtain according to claim 2, **characterised in that** the control means are controlled by a superordinate logic unit (9).

4. The light curtain according to any one of claims 1 to 3, **characterised in that** the control of individual transmitters (5) and receivers (6) for their activation comprises different subprocesses, and that individual subprocesses run in parallel in different cascades (K1, K2, K3).

5. The light curtain according to claim 4, **characterised in that** the transmitters (5) of the transmitter unit (2) are individually activated within a measuring cycle.

6. The light curtain according to claim 5, **characterised in that** a transmitter (5) and an associated receiver (6) each form a transmitter/receiver pair, wherein the transmitters (5) and receivers (6) of a transmitter/receiver pair are synchronously activated.

7. The light curtain according to any one of claims 1 to 6, **characterised in that** the reception signals of the receivers (6) of all cascades (K1, K2, K3) are fed via a signal line (12) to the evaluation unit (13) where they are centrally evaluated.

8. The light curtain according to any one of claims 1 to 6, **characterised in that** the evaluation unit (13) is formed by a plurality of separate evaluation modules, one evaluation module being associated with each cascade (K1, K2, K3) with receivers (6).

9. The light curtain according to claim 8, **characterised in that** the signal evaluations in the evaluation modules are at least partially time-parallel.

## Revendications

1. Rideau lumineux (1) pour la détection d'objets dans une zone de surveillance avec une unité d'émission (2) comprenant un certain nombre d'émetteurs (5) émettant des rayons lumineux, avec une unité de réception (3) comprenant un certain nombre de récepteurs (6) recevant des rayons lumineux (4), dans lequel l'unité d'émission (2) et l'unité de réception (3) sont disposées sur des bords opposés de la zone de surveillance, et dans lequel au moins un récepteur (6) est associé à chaque émetteur (5) de telle sorte que, lorsque la zone de surveillance est libre, les faisceaux lumineux (4) de cet émetteur (5) frappent le récepteur (6) associé, l'émetteur (5) et les récepteurs (6) qui lui sont associés étant chacun activés de manière cyclique pendant un cycle de mesure, et avec une unité d'évaluation (13), dans lequel un signal de détection d'objet est généré à la fin d'un cycle de mesure en fonction des signaux reçus des récepteurs (6), les émetteurs (5) de l'unité d'émission (2) et les récepteurs (6) de l'unité de réception (3) étant chacun combinés pour former des cascades individuelles (K1, K2, K3), les émetteurs (5) ou les récepteurs (6) d'une cascade (K1, K2, K3) étant activés individuellement les uns après les autres à l'intérieur d'un cycle de cascade, et dans lequel les cycles des différentes cascades (K1, K2, K3) d'émetteurs (5) ou de récepteurs (6) à l'intérieur d'un cycle de mesure coïncident au moins partiellement dans le temps, **caractérisé en ce que** pendant chaque cycle de mesure, les émetteurs ou les récepteurs de toutes les cascades sont activés une fois chacun, les différents cycles de cascade se chevauchant dans le temps et étant activés avec un décalage dans le temps.

2. Rideau lumineux selon la revendication 1, **caractérisé en ce que** des moyens de commande sont associés à chaque cascade (K1, K2, K3), au moyen desquels les différents émetteurs (5) ou récepteurs (6) sont activés.

3. Rideau lumineux selon la revendication 2, **caractérisé en ce que** les moyens de commande sont commandés par une unité logique supérieure (9).

4. Rideau lumineux selon l'une quelconque des revendications 1 à 3, **caractérisé en ce que** la commande des émetteurs (5) et des récepteurs (6) individuels pour leur activation comprend différents sous-processus, et **en ce que** les sous-processus individuels s'exécutent en parallèle dans différentes cascades (K1, K2, K3).

5. Rideau lumineux selon la revendication 4, **caractérisé en ce que** les émetteurs (5) de l'unité émettrice (2) sont activés individuellement dans un cycle de mesure.

6. Rideau lumineux selon la revendication 5, **caractérisé en ce qu'**un émetteur (5) et un récepteur associé (6) forment chacun une paire d'émetteurs/ récepteurs, les émetteurs (5) et les récepteurs (6) d'une paire d'émetteurs/ récepteurs étant activés de manière synchrone.

7. Rideau lumineux selon l'une des revendications 1 à 6, **caractérisé en ce que** les signaux de réception des récepteurs (6) de toutes les cascades (K1, K2, K3) sont amenés par une ligne de signaux (12) à l'unité d'évaluation (13) où ils sont évalués de manière centrale.

8. Rideau lumineux selon l'une quelconque des revendications 1 à 6, **caractérisé en ce que** l'unité d'évaluation (13) est formée par une pluralité de modules d'évaluation séparés, un module d'évaluation étant associé à chaque cascade (K1, K2, K3) avec des récepteurs (6).

9. Rideau lumineux selon la revendication 8, **caractérisée en ce que** les évaluations de signaux dans les modules d'évaluation sont au moins partiellement parallèles dans le temps.
